(19)

Europäisches
Patentamt
European
Patent Office
Office européen
des brevets

(11) **EP 1 762 832 B1**

(12) **EUROPEAN PATENT SPECIFICATION**

(45) Date of publication and mention
of the grant of the patent:
**17.08.2011 Bulletin 2011/33**

(51) Int Cl.:
***G01M 1/02*** *(2006.01)*

(21) Application number: **06018491.8**

(22) Date of filing: **04.09.2006**

(54) **Machine for balancing vehicle wheels**

Maschine zum Auswuchten von Fahrzeugrädern

Machine pour équilibrer les roues de véhicule

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **09.09.2005 IT MO20050226**

(43) Date of publication of application:
**14.03.2007 Bulletin 2007/11**

(73) Proprietor: **SICAM S.r.l.**
**42015 Correggio (RE) (IT)**

(72) Inventors:
• **Matteucci, Marco**
**42010 Rio Saliceto (RE) (IT)**

• **Montanari, Marco**
**42040 Campegine (RE) (IT)**
• **Nicolini, Roberto**
**42010 Rio Saliceto (RE) (IT)**

(74) Representative: **Brunacci, Marco et al**
**BRUNACCI & PARTNERS S.r.l.**
**Via Giardini 625**
**41125 Modena (IT)**

(56) References cited:
**US-A- 5 054 918   US-B1- 6 408 528**

**Description**

The present invention refers to a machine for balancing vehicle wheels.

It is known that vehicle wheels, generally consisting of a cylindrical metal rim featuring, at the axial ends, ring-shaped turnups, i.e. circumferential ribs or flanges, between which the tyre beads are fitted, require frequent balancing operations.

Such operations see small weights, made of lead or other material, being attached to the wheel rim to compensate for the irregular distribution of tyre weights.

To carry out this operation, balancing machines are commonly used featuring gripping and rotation means of a wheel, of the type with one rotating horizontal shaft on which the wheel rim is keyed, and electronic means that detect the unbalance of the wheel as the rotating shaft turns it.

Before actually measuring the extent of the unbalance, the balancing machine requires the input of certain data about the wheel that is to be balanced including, in particular, the position of the rim's two ring-shaped turnups where the balancing weights have to be positioned, necessary to achieve correct wheel balance.

To this end, the balancing machines are usually equipped with a pair of mechanical feelers which can be positioned by both ring-shaped turnups so their position can be detected.

Alternatively, it is common practice to substitute the two feelers with a contact-less measuring sensor (laser, ultrasound or the like), fitted with a movement and orientation device so it can be aimed at the tyre and at the rim so the position of the ring-shaped turnups can be detected without having to remove/fit the tyre from/on the wheel.

Other types of balancing machines are equipped with a contact-less sensor alongside the wheel tread which normally detects any unevenness on the tyre; if this type of sensor is required to detect the position of the ring-shaped turnups, the tyre has to be taken off the wheel so the rim can be inspected correctly.

The balancing machines of the type known are susceptible to additional improvement aimed at achieving greater simplicity from a structural point of view plus increasing flexibility and efficiency of use.

As a matter of fact, a pair of feelers and/or a sensor movement/orientation device can often complicate considerably the working of traditional balancing machines.

The fact that the tyre has to be taken off/put back on the wheel is an additional, and inconvenient operation that is not always easy nor practical.

From patent document US 5,054,918 it is known a balancing machine in which a structured light scanning system is provided for the measurement of orientation and physical features of a vehicle wheel to be balanced on the balancing machine.

In order to determine the counterbalancing weights to be applied on the vehicle wheel for balancing it, the light scanning system measures preliminarily the distances of the inside and outside locations of the vehicle wheel rim from a reference plane of the balancing machine.

However the structured light scanning system adopted by this balancing machine appears to be rather complex and expensive, since in particular including a lot of projectors and sensors, associated to light conveying and alignment means, which are arranged at the both sides of the vehicle wheel amounted on the balancing machine.

Therefore even this known balancing machine appears to require further improvements in particular directed to reduce its structural complexity and cost as well as the number of measurements and operations that are carried out directly on the vehicle wheel for determining its dimensional and physical features to be inputted preliminarily to the balancing machine.

The main aim of this invention is to devise a machine for balancing vehicle wheels that makes it possible to achieve the above mentioned improvements and which allows, in particular, to detect the position of the ring-shaped turnups simply without the need for complex mechanisms or having to take the tyre off its rim and then back on.

As part of such technical aim, another purpose of the present invention is to achieve the previous aims with a simple structure, of relatively practical implementation, safe use and effective operation, as well as of a relatively low cost.

This aim and these purposes are all achieved by the apparatus claim 1 and the method claim 12.

Further characteristics and advantages of this invention will appear even more evident from the detailed description of a preferred, but not exclusive, form of embodiment of a machine for balancing vehicle wheels, illustrated by way of non limiting example in the attached drawings, wherein:

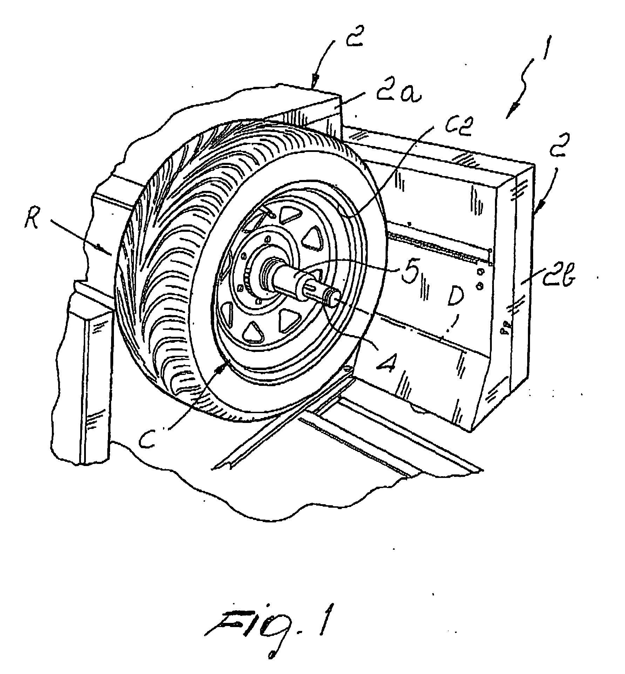

figure 1 is a partial view in perspective of the machine according to the invention;

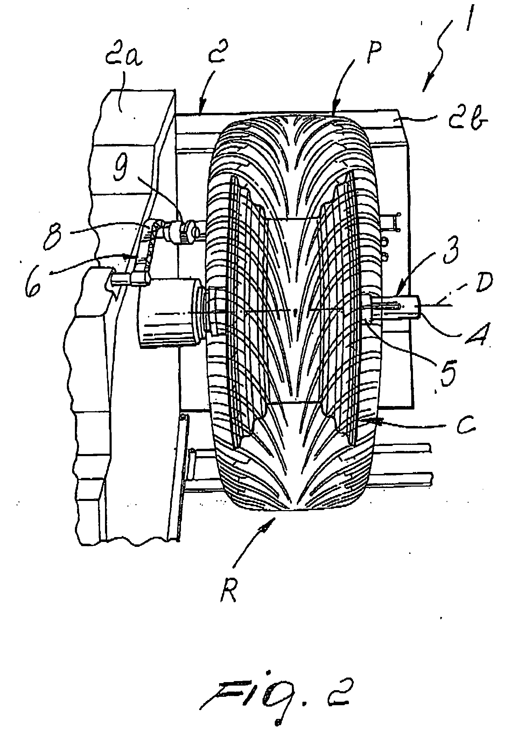

figure 2 is a partial and front view in perspective of the machine according to the invention;

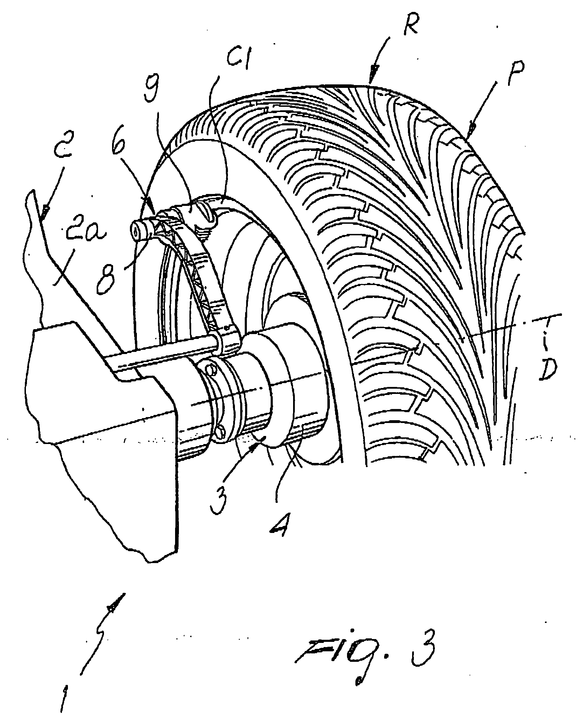

figure 3 is another partial view in perspective of the machine according to the invention;
figure 4 is a view in perspective from another angle of a portion of the machine according to the invention;
figure 5 is a schematic and partial cross-section view of a wheel to balance inserted in the reference system of the machine according to the invention.

With special reference to such figures, a machine for balancing vehicle wheels has been generally designated by reference numeral 1.

The machine 1 comprises a frame 2 that supports the gripping and rotation means 3 of a wheel R to balance around a horizontal axis D.

In particular, the frame 2 is made up of a base block 2a that contains the supporting and motorisation system of the gripping and rotation means 3, and of a vertical wall 2b associated to one side of the base block 2a.

The gripping and rotation means 3 are composed of a shaft 4, that defines the axis D and extends from the base block 2a parallel with the vertical wall 2b, and a bush 5, associable to the free end of the shaft 4 for centring and fixing the rim C of the wheel R.

When the wheel R is mounted on the shaft 4, a first ring-shaped turnup $C_1$ of the rim C is alongside the base block 2a while the second ring-shaped turnup $C_2$, opposite the first, is turned towards the outside of the machine 1.

The measuring means 6 of the position of the first ring-shaped turnup $C_1$ of the rim C and the detection means 7 of the profile Pr of wheel R tyre P are mounted on the frame 2.

More specifically, the measuring means 6 include a feeler element 8 mounted on the base block 2a which slides in a direction parallel to the axis D and which conveniently features an end 9 able to allow the attachment of balancing weights to the wheel rim C.

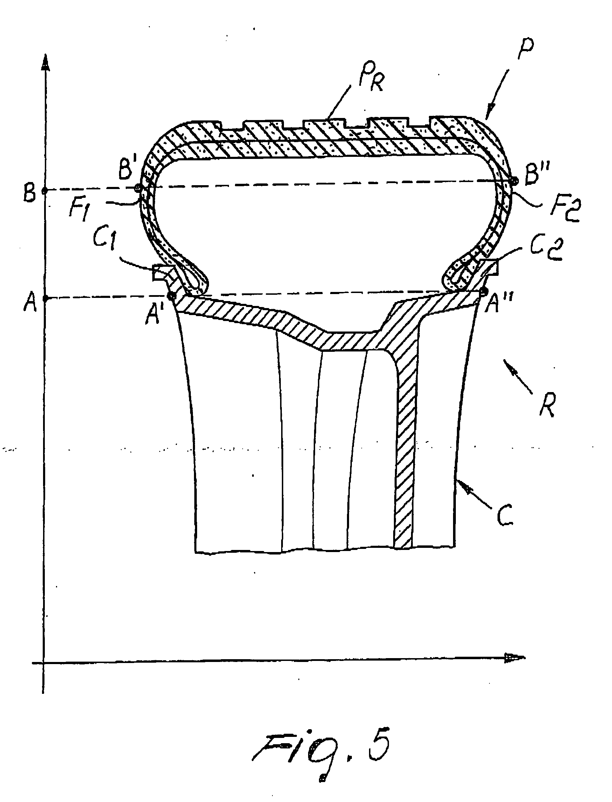

When using, the feeler element 8 is made to slide along until it comes up against the first ring-shaped turnup $C_1$; under these circumstances, an electronic device, not illustrated in detail in the figures, detects the position of the feeler element 8 and hence the position of the first ring-shaped turnup $C_1$ in relation to a preestablished reference system, schematically illustrated in figure 5.

In such a reference system, the position of the first ring-shaped turnup $C_1$ is defined by segment AA'.

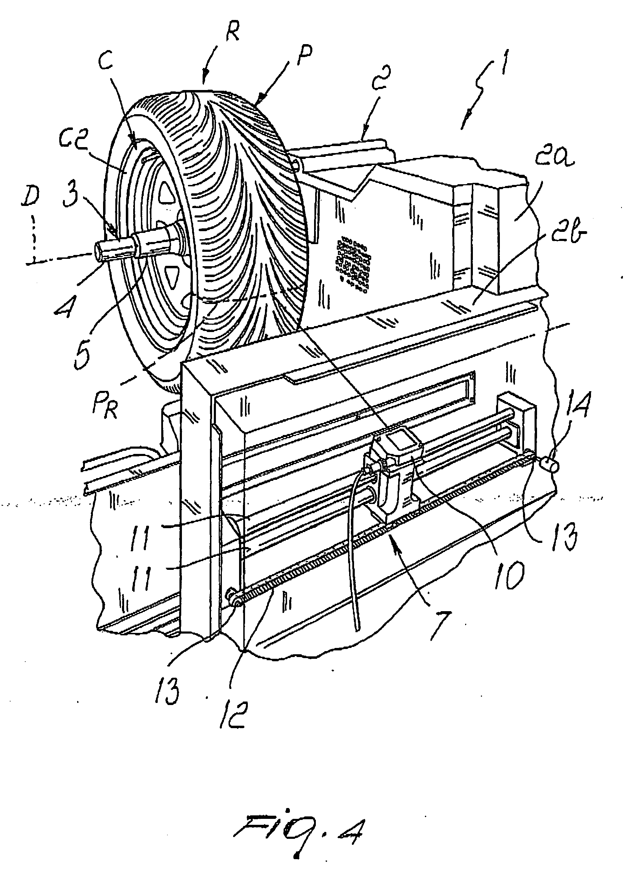

Advantageously, the detection means 7 are the contact-less type and, in the particular form of embodiment of the invention illustrated in figure 4, comprise an optical type sensor 10 mounted, sliding, on straight guide means 11 that extend in a direction parallel with axis D and made up, for example, of two support bars integrally connected to the vertical wall 2b.

Driving means cause the sensor 10 to slide along the bars 11, such means being usefully made of a flexible element 12, which can be a belt or something similar, closed like a ring, associated to the sensor 10, and wound between a pair of wheels 13, one the driving wheel, the other the driven wheel.

An encoder 14 is associated to one of the wheels 13 and measures its rotation around its own axis so the axial position of the sensor 10 can be determined.

The sensor 10 is substantially positioned alongside the tread of the wheel R, emitting a laser signal substantially orthogonal to axis D and, by means of the guide means 11, it is able to determine the position of a fair number of points of the tyre P, defined by the values according to the extent the sensor 10 slides along the bars 11 and by the corresponding distance values of the tyre P measured by the sensor itself and which, interpolated, identify its profile Pr.

According to the invention the machine 1 comprises a processing and control unit, not illustrated in detail in the figures, operatively connected to the measuring means 6 and detection means 7, designed to calculate the position of the second ring-shaped turnup $C_2$ dependent upon the values detected by the measuring means 6 and by the detection means 7.

In particular, from the profile Pr of the tyre P the processing and control unit is able to calculate the position of the sides F1 and F2 of the tyre P; in the schematic representation of the wheel R, illustrated in figure 5, the position of the side F 1 alongside the base block 2a is defined by segment BB' while that of the opposite side F2 is defined by segment BB".

Once the values AA', BB' and BB" have been evaluated, the position of the second ring-shaped turnup $C_2$, identified in figure 5 by segment AA", is calculated with the following formula:

$$AA''=BB''-(AA'-BB')$$

Likewise, the processing and control unit of this invention is able to evaluate the nominal width of the rim C.

Indicating the thickness of the plate of rim C with an S and the same rim's nominal width with an L, we have the following:

$$L=(BB''-BB')-2*(AA'-BB')-2*S$$

Calculating L this way, it is compared by the processing and control unit with the dimensions of the rims normally found on the market and which are stored during the production and/or post-production phases in the unit's own electronic archives; such a comparison allows the machine 1 to find the actual nominal width of the rim C before calculating the unbalance of the wheel R.

Practically speaking, it has been ascertained how the described invention achieves the intended purposes and, in particular, the fact is underlined that it allows to detect the position of both ring-shaped turnups of the wheel rim in a practical and easy way by using a highly functional and simple structure and leaving the tyre in place on the rim.

The invention thus conceived is susceptible of numerous modifications and variations, all of which falling within the scope of the inventive concept.

Furthermore all the details can be replaced with others that are technically equivalent.

In practice, the materials used, as well as the shapes and dimensions, may be any according to requirements without falling outside the protection scope of the following claims.

**Claims**

1.  Machine (1) for balancing a vehicle wheel (R) having a wheel rim (C) with a first and a second ring-shaped turnup (C1, C2) or flange for the fitting of a tyre (P) on the wheel rim (C), comprising

    - a supporting frame (2, 2a) for a gripping and rotation means (3) of the wheel (R) to be balanced around a substantially horizontal rotation axis (D),
    - measuring means (6), supported by said supporting frame (2), for measuring of the position of the wheel rim (C) with respect to a reference plane, defined by said supporting frame (2, 2a), perpendicular to said horizontal rotation axis (D) of the wheel (R); and
    - detection means (7, 10), supported by said supporting frame (2), for the contactless detection of at least one portion of the profile (Pr) of the wheel tyre (P),

    **characterised by** the fact that the machine comprises a processing and control unit, operatively sociated to said measuring means (6) and to said detection means (7) and is configured to calculate the position AA", with respect to said reference plane, of the second ring-shaped turnup (C2) of the wheel rim (C) arranged at a side (F2) of it opposite to said reference plane, in accordance with the following formula:

    $$AA"=BB"-(AA'-BB'),$$

    in which formula

    AA' is the position with respect to said reference plane, as measured by said measuring means (6), of the first ring-shaped turn-up (C1) of the wheel rim (C), arranged on it alongside (F1) said reference plane; and
    BB' and BB" are the positions with respect to said reference plane, as derived from the contact-less detection by said detection means, of a first and of a second portion of the wheel tyre profile (Pr), arranged on said tyre (P) respectively alongside (F1) and at an opposite side (F2) with respect to said reference plane;
    wherein said machine (1) is configured to determine the unbalancing of said wheel (R) by processing the values, so obtained, of the positions AA' and AA", with respect to said reference plane, respectively of said first (C1) and of said second (C2) ring-shaped turnup of the wheel rim (R).

2.  Machine according to claim 1, **characterized by** the fact that said processing and control unit is configured to calculate the position of the sides (F1, F2) of the wheel tyre (P) dependent upon the values (BB', BB") detected by said detection means (7).

3.  Machine according to one or more of the preceding claims, **characterized by** the fact that said processing and control unit is configured to calculate the nominal width (L) of the wheel rim (C) dependent upon the values (AA', BB', BB") measured and detected by said measuring means (6) and said detection means (7).

4.  Machine according to one or more of the preceding claims, **characterized by** the fact that said processing and control unit features electronic archives where the dimensions of the rims normally found on the market are stored.

5. Machine according to one or more of the preceding claims, **characterized by** the fact that said measuring means (6) comprise at least one feeler element (8) sliding in a direction substantially parallel to said axis (D).

6. Machine according to claim 5, **characterized by** the fact that said feeler element (8) comprises at least one end (9) able to allow the attachment of balancing weights to the wheel rim (C).

7. Machine according to one or more of the preceding claims, **characterized by** the fact that said detection means (7) comprise at least one optical type sensor (10).

8. Machine according to claim 7, **characterized by** the fact that said detection means (7) comprise straight guide means (11) of said sensor (10) in a direction substantially parallel with said axis (D).

9. Machine according to claim 8, **characterized by** the fact that said straight guide means comprise at least two support sliding bars (11) of said sensor (10), associated to said supporting frame (2) parallel to said axis (D).

10. Machine according to claims 8 or 9, **characterized by** the fact that said detection means (7) comprise driving means (12, 13) of said sensor (10) along said guide means (11).

11. Machine according to claim 10, **characterized by** the fact that said driving means comprise at least one flexible element (12), closed like a ring, associated to said sensor (10) and wound between at least one pair of wheels (13), at least one of which is the driving wheel.

12. Method of balancing, on a wheel balancing machine, a vehicle wheel (R) having a wheel rim (C) with two ring-shaped turnups (C1, C2) arranged at opposite sides of said wheel rim (C) and a wheel tyre (P) fitted between said two turnups, the wheel balancing machine including :

   - a supporting frame (2) for a gripping and rotation means (3) of the vehicle wheel (R) to be balanced around a substantially horizontal rotation axis (D),
   - measuring means (6), supported by said suppoting frame (2), for measuring the position of the wheel rim (C), with respect to a reference plane, defined by said supporting frame (2, 2a), perpendicular to said horizontal rotation axis (D); and
   - detection means (7, 10), supported by said supporting frame (2), for the contact-less detection of at least one portion of the profile (Pr) of the wheel tyre (P), and
   - a processing and control unit operatively associated with said measuring and detection means;
   the method comprising the following steps:
   - measuring, by said measuring means, the position AA', with respect to said reference plane, of a first ring-shaped turnup (C1), of said wheel rim (C), arranged alongside (F1) said reference plane;
   - detecting in a contact less manner, by said detection means (7, 10) a first portion of the profile (Pr) of the wheel tyre (P), arranged alongside said reference plane, and calculating from the detected data the position BB' of this first portion with respect to said reference plane;
   - detecting in a contact-less manner, by said detection means (7, 10), a second portion of the wheel tyre profile (Pr), arranged at the opposite side (F2) with respect to said reference plane, and calculating from the detected data the position BB", BB' of this second with respect to said reference plane;
   - calculating, by said processing and control unit, the position AA" of the second ring-shaped turnup (C2) of the wheel rim (C), with respect to said reference plane of said supporting frame (2, 2a), in accordance with the following formula:

$$AA''=\overline{BB}''-(AA'-BB'),$$

   and
   - determining the unbalance of the vehicle wheel (R) by processing the values so obtained of the position (AA', AA") of said first (C1) and second (C2) ring-shaped turnups with respect to said reference plane.

13. Method according to claim 12, further including a step of calculating the nominal width (L) of the rim (C) of the vehicle wheel (R) to be balanced in accordance with the following formula:

$$L = (BB''-BB') - 2*(AA'-BB') - 2*S,$$

wherein:

L is the calculated nominal width of the wheel rim (C),
S is the thickness of the plate of the wheel rim (C)

14. Method according to claim 13, further including, before the step of determining the unbalance of the vehicle wheel (R), a step of finding the actual nominal width of the respective wheel rim (C) by comparing the nominal wheel rim width (L), as previously calculated, with the dimensions of the rims normally found on the market.

15. Method according to anyone of claims 12 to 14, wherein the measuring step of the position of the first ring-shaped turnup (C1) of the wheel rim (C) is carried out by using one feeler element (6, 8) sliding in a direction substantially parallel to said horizontal axis (D).

**Patentansprüche**

1. Maschine (1) zum Auswuchten eines Fahrzeugrades (R) mit einem ersten und einem zweiten ringförmigen Umschlag (C1, C2) oder Horn zum Aufziehen eines Reifens (P) auf der Radfelge (C), die aufweist:

- einen Tragrahmen (2, 2a) für eine Greif- und Dreheinrichtung (3) für das Rad (R), das um eine im Wesentliche horizontale Drehachse (D) ausgewuchtet werden soll,
- eine vom Tragrahmen (2) getragene Messeinrichtung (6) zum Messen der Stellung der Radfelge (C) in Bezug auf eine Referenzebene, die durch den Halterahmen (2, 2a), senkrecht zur horizontalen Drehachse (D) des Rades (R), definiert wird; und
- eine vom Tragrahmen (2) getragene Erfassungseinrichtung (7, 10) für das berührungslose Erfassen mindestens eines Teils des Profils (Pr) des Radreifens (P),

**dadurch gekennzeichnet, dass** die Maschine eine Verarbeitungs- und Steuereinheit aufweist, die mit der Messeinrichtung (6) und der Erfassungseinrichtung (7) funktional verbunden und konfiguriert ist, in Bezug auf die Referenzebene die Stellung AA'' des zweiten ringförmigen Umschlages (C2) der Radfelge (C), die auf einer Seite (F2) davon gegenüber der Referenzebene angeordnet ist, nach folgender Formel zu berechnen:

$$AA'' = BB'' - (AA' - BB'),$$

hierbei sind

AA' die Stellung in Bezug auf die Referenzebene, wie sie durch die Messeinrichtung (6) gemessen wird, des ersten ringförmigen Umschlages (C1) der Radfelge (C), die darauf entlang einer Seite (F1) der Referenzebene angeordnet ist; und
BB' und BB'' die Stellungen in Bezug auf die Referenzebene, wie sie aus der berührungslosen Erfassung durch die Erfassungseinrichtung abgeleitet werden, eines ersten und eines zweiten Teils des Radreifenprofils (Pr) auf dem Reifen (P) entlang einer Seite (F1) bzw. einer gegenüberliegenden Seite (F2) in Bezug auf die Referenzebene;
wobei die Maschine (1) konfiguriert ist, die Unwucht des Rades (R) durch das Verarbeiten der so erhaltenen Werte der Stellungen AA' und AA'' in Bezug auf die Referenzebene des ersten (C1) bzw. des zweiten (C2) ringförmigen Umschlages der Radfelge (R) zu bestimmen.

2. Maschine gemäß Anspruch 1, **dadurch gekennzeichnet, dass** die Verarbeitungs- und Steuereinheit konfiguriert ist, die Stellung der Seiten (F1, F2) des Radreifens (P) abhängig von den durch die Erfassungseinrichtung erfassten Werten (BB', BB'') zu berechnen.

3. Maschine gemäß einem oder mehr der vorangegangenen Ansprüche, **dadurch gekennzeichnet, dass** die Verarbeitungs- und Steuereinheit konfiguriert ist, die Nennbreite (L) der Radfelge (C) abhängig von den durch die Messeinrichtung (6) und die Erfassungseinrichtung (7) gemessenen und erfassten Werten (AA', BB', BB") zu berechnen.

4. Maschine gemäß einem oder mehr der vorangegangenen Ansprüche, **dadurch gekennzeichnet, dass** die Verarbeitungs- und Steuereinheit elektronische Archive aufweist, in denen die Abmessungen der marktüblichen Felgen gespeichert sind.

5. Maschine gemäß einem oder mehr der vorangegangenen Ansprüche, **dadurch gekennzeichnet, dass** die Messeinrichtung (6) mindestens ein Ablastelement (8) aufweist, das im Wesentlichen parallel zur Achse (D) gleitet.

6. Maschine gemäß Anspruch 5, **dadurch gekennzeichnet, dass** das Abtastelement (8) mindestens ein Ende (9) aufweist, das fähig ist, das Anbringen von Wuchtgewichten an der Radfelge (C) zu erlauben.

7. Maschine gemäß einem oder mehr der vorangegangenen Ansprüche, **dadurch gekennzeichnet, dass** die Erfassungseinrichtung (7) mindestens einen Sensor (10) von optischer Bauart aufweist.

8. Maschine gemäß Anspruch 7, **dadurch gekennzeichnet, dass** die Erfassungseinrichtung (7) eine gerade Führungseinrichtung (11) für den Sensor (10) im Wesentlichen parallel zur Achse (D) aufweist.

9. Maschine gemäß Anspruch 8, **dadurch gekennzeichnet, dass** die gerade Führungseinrichtung mindestens zwei tragende Gleitstäbe (11) für den Sensor (10) aufweist, die mit dem Tragrahmen (2) parallel zur Achse (D) verbunden sind.

10. Maschine gemäß Anspruch 8 oder 9, **dadurch gekennzeichnet, dass** die Erfassungseinrichtung (7) - eine Antriebseinrichtung (12, 13) für den Sensor (10) entlang der Führungseinrichtung (11) aufweist.

11. Maschine gemäß Anspruch 10, **dadurch gekennzeichnet, dass** die Antriebseinrichtung mindestens ein wie ein Ring geschlossenes, flexibles Element (12) aufweist, das mit dem Sensor (10) verbunden und um mindestens ein Paar Räder (13), von denen mindestens eines das Antriebsrad ist, gelegt ist.

12. Verfahren zum Auswuchten eines Fahrzeugrades (R), das eine Radfelge (C) mit zwei ringförmigen Umschlägen (C1, C2), die auf gegenüberliegenden Seiten der Radfelge (C) angeordnet sind, und einen Radreifen (P), der zwischen den zwei Umschlägen montiert ist, besitzt, auf einer Radauswuchtmaschine, wobei die Radauswuchtmaschine besitzt:

   - einen Tragrahmen (2) für eine Greif- und Dreheinrichtung (3) für das Fahrzeugrad (R), das um eine im Wesentlichen horizontale Drehachse (D) ausgewuchtet werden soll,
   - eine Messeinrichtung (6), die vom Tragrahmen (2) getragen wird, zum Messen der Stellung der Radfelge (C) in Bezug auf eine Referenzebene, die durch den Tragrahmen, senkrecht zur horizontalen Drehachse (D), definiert wird; und
   - eine vom Tragrahmen (2) getragene Erfassungseinrichtung (7, 10) für die berührungslose Erfassung mindestens eines Teils des Profils (Pr) des Radreifens (P) und
   - eine Verärbeitungs- und Steuereinheit, die mit den Mess- und Erfassungseinrichtungen funktional verbunden ist;

   wobei das Verfahren folgende Schritte aufweist:

   - Messen durch die Messeinrichtung, in Bezug auf die Referenzebene, der Stellung AA' eines ersten ringförmigen Umschlages (C1) der Radfelge (C) entlang (F1) der Referenzebene;
   - berührungsloses Erfassen durch die Erfassungseinrichtung (7, 10) eines ersten Teils des Profils (Pr) des Radreifens (P) entlang der Referenzebene und Berechnen, aus den erfassten Daten, der Stellung BB' dieses ersten Teils in Bezug auf die Referenzebene;
   - berührungsloses Erfassen durch die Erfassungseinrichtung (7, 10) eines zweiten Teils des Radreifenprofils (Pr) auf der gegenüberliegenden Seite (F2) in Bezug auf die Referenzebene und Berechnen, aus den erfassten Daten, der Stellung BB", BB' dieses zweiten Teils in Bezug auf die Referenzebene;
   - Berechnen durch die Verarbeitungs- und Steuereinheit der Stellung AA'' des zweiten ringförmigen Umschlages (C2) der Radfelge (C) in Bezug auf die Referenzebene des Tragrahmens (2, 2a) nach folgender Formel:

$$AA'' = BB'' - (AA' - BB')$$

und

- Bestimmen der Unwucht des Fahrzeugrades (R) durch Verarbeiten der so erhaltenen Werte der Stellung (AA', AA") des ersten (C1) und des zweiten (C2) ringförmigen Umschlages in Bezug auf die Referenzebene.

13. Verfahren gemäß Anspruch 12, ferner mit einem Schritt zum Berechnen der Nennbreite (L) der Felge (C) des auszuwuchtenden Fahrzeugrades (R) nach folgender Formel:

$$L = (BB'' - BB') - 2*(AA' - BB') - 2*S,$$

hierbei sind:

L die berechnete Nennbreite der Radfelge (C),
S die Dicke des Blechs der Radfelge (C).

14. Verfahren gemäß Anspruch 13, ferner, vor dem Schritt zum Bestimmen der Unwucht des Fahrzeugrades (R), mit einem Schritt zum Ermitteln der tatsächlichen Nennbreite der entsprechenden Radfelge (C) durch Vergleichen der Nennbreite (L) der Radfelge, wie zuvor berechnet, mit den Abmessungen der marktüblichen Felgen.

15. Verfahren gemäß einem der Ansprüche 12 bis 14, bei dem der Schritt zum Messen der Stellung des ersten ringförmigen Umschlagen (C1) der Radfelge (C) unter Verwendung eines Abtastelements (6, 8), das im Wesentlichen parallel zur horizontalen Achse (D) gleitet, ausgeführt wird.

## Revendications

1. Machine (1) pour l'équilibrage des roues de véhicule (R) qui ont une jante (C) avec un premier et un deuxième revers (C1, C2) ou collet en forme d'anneau pour monter un pneu (P) sur la jante (C), comprenant

- un cadre de support (2, 2a) pour des moyens de préhension et de rotation (3) d'une roue (R) qu'il faut équilibrer autour d'un axe de rotation (D) sensiblement horizontal,
- des moyens de mesure (6), soutenus par ledit cadre de support (2), pour mesurer la position de la jante (C) par rapport à un plan de référence, défini par ledit cadre de support (2, 2a), perpendiculaire par rapport audit axe de rotation (D) horizontal de la roue (R) ; et
- des moyens de détection (7, 10), soutenus par ledit cadre de support (2), pour la détection sans contact d'au moins une portion du profil (Pr) du pneu (P),

**caractérisée par le fait que** la machine comprend une unité de traitement et de contrôle, fonctionnellement associée auxdits moyens de mesure (6) et auxdits moyens de détection (7) et est configurée pour calculer la position AA", par rapport audit plan de référence, du deuxième revers (C2) en forme d'anneau de la jante (C) disposée sur un coté (F2) d'elle opposée par rapport audit plan de référence, selon la formule suivante :

$$AA'' = BB'' - (AA' - BB'),$$

où dans la formule

AA' est la position, par rapport audit plan de référence, mesurée par lesdits moyens de mesure (6), du premier revers (C1) en forme d'anneau de la jante (C), disposée sur elle à côté (F1) dudit plan de référence ; et
BB' et BB" sont les positions, par rapport audit plan de référence, dérivées par la détection sans contact desdits moyens de détection, d'un premier et d'une deuxième portion du profil (Pr) du pneu, disposées sur ledit pneu (P) respectivement sur le côté (F1) et sur le côté (F2) opposé par rapport audit plan de référence ;
où ladite machine (1) est configurée de façon à déterminer le déséquilibrage de ladite roue (R) en procédant les valeurs des positions AA' et AA" obtenues, par rapport audit plan de référence, dudit premier (C1) et dudit deuxième (C2) revers en forme d'anneau respectivement de ladite jante (R).

2. Machine selon la revendication 1, **caractérisée par le fait que** ladite unité de traitement et de contrôle est configurée de façon à calculer les positions des côtés (F1, F2) du pneu (P) en fonction des valeurs (BB', BB") détectées par lesdits moyens de détection (7).

3. Machine selon l'une ou plusieurs des revendications précédentes, **caractérisée par le fait que** ladite unité de traitement et de contrôle est configurée de façon à calculer la largeur nominale (L) de la jante (C) en fonction des valeurs (AA', BB', Bd") mesurées et détectées par lesdits moyens de mesure (6) et lesdits moyens de détection (7).

4. Machine selon l'une ou plusieurs des revendications précédentes, **caractérisée par le fait que** ladite unité de traitement et de contrôle comprend des archives électroniques où sont stockées les dimensions des jantes qui se trouvent normalement sur le marché.

5. Machine selon l'une ou plusieurs des revendications précédentes, **caractérisée par le fait que** lesdits moyens de mesure (6) comprennent au moins un élément tâteur (8) coulissant dans une direction sensiblement parallèle audit axe (D).

6. Machine selon la revendication 5, **caractérisée par le fait que** ledit élément tâteur (8) comprend au moins une extrémité (9) apte à permettre la fixation des masses d'équilibrage de la jante (C).

7. Machine selon l'une ou plusieurs des revendications précédentes, **caractérisée par le fait que** lesdits moyens de détection (7) comprennent au moins un capteur de type optique (10).

8. Machine selon la revendication 7, **caractérisée par le fait que** lesdits moyens de détection (7) comprennent des moyens de guidage (11) linéaires dudit capteur (10) dans une direction sensiblement parallèle audit axe (D).

9. Machine selon la revendication 8, **caractérisée par le fait que** lesdits moyens de guidage linéaire comprennent au moins deux barres coulissantes (11) de support dudit capteur (10), associées audit cadre de support (2) parallèle audit axe (D).

10. Machine selon les revendications 8 ou 9, **caractérisée par le fait que** lesdits moyens de détection (7) comprennent des moyens d'entraînement (12, 13) dudit capteur (10) le long desdits moyens de guidage (11).

11. Machine selon la revendication 10, **caractérisée par le fait que** lesdits moyens d'entraînement comprennent au moins un élément flexible (12), fermé comme une bague, associé audit capteur (10) et enroulé entre au moins une paire de roues (13), où au moins une d'entre elles est la roue motrice.

12. Méthode d'équilibrage, pour une machine pour l'équilibrage de roues, d'une roue de véhicule (R) qui a une jante (C) avec deux revers (C1, C2) en forme d'anneau disposés sur les côtés opposés de ladite jante (C) et un pneu (P) monté entre lesdits deux revers, la machine pour l'équilibrage de roues comprenant :

   - un cadre de support (2) pour un moyen de préhension et de rotation (3) d'une roue (R) de véhicule qu'il faut équilibrer autour d'un axe de rotation (D) sensiblement horizontal,
   - des moyens de mesure (6), soutenus par ledit cadre de support (2), pour mesurer la position de la jante (C) par rapport a un plan de référence défini par ledit cadre de support (2, 2a), perpendiculaire par rapport audit axe de rotation (D) horizontale ; et
   - des moyens de détection (7, 10), soutenus par ledit cadre de support (2), pour la détection sans contact d'au moins une portion du profil (Pr) du pneu (P), et
   - une unité de traitement et de contrôle, fonctionnellement associée auxdits moyens de mesure et détection ; la méthode comprenant les étapes suivantes :

   mesurer, avec lesdits moyens de mesure, la position AA', par rapport audit plan de référence, du premier revers (C1) en forme d'anneau de la jante (C), disposée à côté (F1) dudit plan de référence ;
   - détecter, de façon sans contact, avec lesdits moyens de détection (7, 10), une première portion du profil (Pr) du pneu (P), disposée sur le côté dudit plan de référence, et calculer à partir des valeurs détectées la position BB' de cette première portion par rapport audit plan de référence ;

- détecter, de façon sans contact, avec lesdits moyens de détection (7, 10), une deuxième portion du profil (Pr) du pneu, disposée sur le côté opposé (F2) par rapport audit plan de référence, et calculer, à partir des valeurs détectées, la position BB", BB' de cette deuxième par rapport audit plan de référence ;

- calculer, avec ladite unité de traitement et de contrôle, la position AA" du deuxième revers (C2) en forme d'anneau de la jante (C), par rapport audit plan de référence dudit cadre de support (2, 2a), selon la formule suivante :

$$AA'' = BB'' - (AA' - BB')$$

et

- déterminer le déséquilibrage de la roue de véhicule (R) élaborant les valeurs ainsi obtenues de la position (AA', AA") dudit premier (C1) et deuxième (C2) revers en forme d'anneau par rapport audit plan de référence.

**13.** Méthode selon la revendication 12, qui comprend en outre une étape de calcul de la largeur nominale (L) de la jante (C) de la roue (R) de véhicule qu'il faut équilibrer selon la formule suivante :

$$L = (BB'' - BB') - 2*(AA' - BB') - 2*S,$$

où :

L est la largeur nominale calculée de la jante (C),
S est l'épaisseur de la plaque de la jante (C).

**14.** Méthode selon la revendication 13, qui comprend en outre, avant l'étape de détermination du déséquilibrage de la roue de véhicule (R), une étape de recherche de la largeur nominale actuelle de la jante (C) respective en comparant la largeur nominale (L) de la jante, comme calculé précédemment, avec les dimensions des jantes -qui se trouvent normalement sur le marché.

**15.** Méthode selon une des revendications de la 12 à la 14, où l'étape de mesure de la position du premier revers (C1) en forme d'anneau de la jante (C) est effectuée en utilisant un élément tâteur (6, 8) coulissant dans une direction sensiblement parallèle par rapport audit axe horizontal (D).

Fig. 1

Fig. 2

Fig. 3

FIg. 4

Fig. 5

**EP 1 762 832 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5054918 A